(19) Europäisches Patentamt
European Patent Office
Office européen des brevets

(11) **EP 3 080 503 B1**

(12) **FASCICULE DE BREVET EUROPEEN**

(45) Date de publication et mention de la délivrance du brevet:
**31.10.2018 Bulletin 2018/44**

(21) Numéro de dépôt: **14821780.5**

(22) Date de dépôt: **02.12.2014**

(51) Int Cl.:
*B29C 63/14* *(2006.01)*     *B29C 65/02* *(2006.01)*
*B32B 7/00* *(2006.01)*     *B32B 27/06* *(2006.01)*
*F16L 13/02* *(2006.01)*     *F16L 25/01* *(2006.01)*
*F16L 53/37* *(2018.01)*     *F16L 58/18* *(2006.01)*
*F16L 59/20* *(2006.01)*     *B29L 23/00* *(2006.01)*
*B29K 105/06* *(2006.01)*     *B29K 307/04* *(2006.01)*

(86) Numéro de dépôt international:
**PCT/FR2014/053126**

(87) Numéro de publication internationale:
**WO 2015/086954 (18.06.2015 Gazette 2015/24)**

(54) **BANDE COMPOSITE, ET PROCÉDÉS POUR FORMER UNE JONCTION ENTRE DEUX CONDUITES**

VERBUNDSTREIFEN SOWIE VERFAHREN ZUR HERSTELLUNG EINER VERBINDUNG ZWISCHEN ZWEI LEITUNGEN

COMPOSITE STRIP, AND METHODS FOR FORMING A JUNCTION BETWEEN TWO CONDUITS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2013 FR 1362506**

(43) Date de publication de la demande:
**19.10.2016 Bulletin 2016/42**

(73) Titulaire: **Total SA**
**92400 Courbevoie (FR)**

(72) Inventeurs:
• **LEWANDOWSKI, Alexandre**
**F-64000 Pau (FR)**
• **REY-BETHBEDER, Franck**
**F-64000 Pau (FR)**
• **DELAPORTE, Dominique**
**F-64000 Pau (FR)**
• **LECHON, Alain**
**F-64000 Pau (FR)**
• **GELI, Maurice**
**F-64230 Lescar (FR)**
• **BUZARÉ, Yann**
**F-64110 Gelos (FR)**

(74) Mandataire: **Cabinet Plasseraud**
**66, rue de la Chaussée d'Antin**
**75440 Paris Cedex 09 (FR)**

(56) Documents cités:
DE-A1-102010 010 929     DE-U1- 20 311 617
FR-A1- 2 220 120     GB-A- 2 403 995
US-A1- 2013 087 278

## Description

### DOMAINE TECHNIQUE

La présente invention est relative à une bande composite pour former une jonction entre deux conduites, et aux procédés pour former ladite jonction.

### ETAT DE LA TECHNIQUE ANTERIEURE

Plus particulièrement, l'invention concerne une bande composite s'étendant dans une direction principale entre des première et deuxième extrémités, ladite bande composite comprenant une bande principale comprenant des premières fibres noyées dans une matrice, lesdites premières fibres étant en carbone, matériau conducteur d'électricité, et ladite matrice étant composée d'au moins un polymère, et ladite bande composite comprenant en outre une couche de jonction formée d'un matériau de jonction conducteur d'électricité.

En outre, l'invention a pour objet de former une jonction entre deux conduites pour le transport d'un fluide, par exemple un fluide comprenant un hydrocarbure (pipeline). Certaines de ces conduites comprennent une couche composite conductrice d'électricité. Ce type de conduite est utilisé par exemple dans des environnements très froid, à terre comme en mer, et parfois en mer à de très grandes profondeurs. Dans ces conditions le fluide peut soit se congeler, soit se coaguler, soit figer, épaissir ou former des dépôts de paraffine ou d'hydrate. Ces transformations du fluide peuvent générer des bouchons et entraver le transport du fluide dans la conduite. C'est pourquoi ces conduites sont parfois chauffées pour éviter ces inconvénients. Une technique connue est le chauffage électrique de ces conduites par des lignes conductrices en cuivre placées autour des conduites.

Le document CN2800021-Y décrit une telle conduite pour le transport d'un hydrocarbure, ayant un tube en plastique renforcé par des fibres de verre, et une première couche en fibre de carbone alimentée électriquement pour réchauffer le tube.

Cependant, les conduites nécessaires pour le transport d'hydrocarbure ont des longueurs très importantes pouvant aller à plusieurs kilomètres. Le document précédent ne propose aucune solution, ni pour connecter mécaniquement les conduites les unes à la suite des autres, ni pour connecter électriquement entre-elles les couches conductrices d'électricité de ces conduites.

Le document FR2958991 décrit une telle conduite perfectionnée pour le transport d'un hydrocarbure, qui comprend en outre une couche de renfort adaptée pour améliorer la tenue mécanique. Ce document décrit en outre des moyens d'assemblages entre conduites comprenant en outre des moyens d'alimentation électrique pour la couche de chauffage.

Cependant, ces moyens de connexion entre les conduites sont complexes. Il est donc nécessaire de trouver d'autres solutions de jonction ou connexion des conduites entre elles.

Le document DE 203 11 617 U1 décrit une conduite de carburant pour véhicule automobile comprenant un manchon en plastique conducteur adhéré au tube de la conduite par une couche également conductrice.

Le document US 2013/087278 A1 décrit un procédé de liaison de composants par effet Joule pour cuire un adhésif composite de type époxy-nanotubes de carbone.

Le document DE 10 2010 010929 A1 décrit une conduite d'eau dotée d'un système de chauffage intégré pour la protection contre le gel, et les éléments de liaison, de raccordement et de réglage adaptés à cet effet.

### EXPOSE DE L'INVENTION

La présente invention a pour but de perfectionner une bande composite du type précité, notamment pour effectuer la jonction mécanique et électrique entre des couches de chauffage en carbone de conduites pour le transport d'hydrocarbure.

A cet effet, la bande composite est caractérisée en ce que ladite couche de jonction est disposée sur la bande principale, uniquement aux première et deuxième extrémités de la bande composite.

Grâce à ces dispositions, la bande composite préformée est adaptée à être utilisé immédiatement pour réaliser la jonction électrique entre des couches de chauffage de deux conduites mises bout-à-bout.

De plus, la jonction électrique est très efficace parce que les matériaux des couches de chauffage et de la bande composite se soudent naturellement, et parce que la couche de jonction de la bande composite a de très bonnes caractéristiques électriques. La bande composite est alors apte à former une jonction électrique avec une faible résistance électrique, ce qui permet d'éviter des pertes électriques par effet Joule entre chaque conduite, et qui permet d'éviter des surchauffes locales pouvant endommager la conduite d'hydrocarbure assemblée.

De plus, la jonction mécanique est mécaniquement très résistante. La conduite d'hydrocarbure assemblée est quasiment continue entre les première et deuxième conduites adjacentes. On supprime ainsi les faiblesses mécaniques localisées à chaque jonction.

Dans divers modes de réalisation de la bande composite selon l'invention, on peut éventuellement avoir recours en outre à l'une et/ou à l'autre des dispositions suivantes.

Selon un aspect de l'invention, la couche de jonction a la forme de bandes s'étendant le long des première et deuxième extrémités, chacune desdites bandes ayant une largeur dans la direction principale supérieure à 1 cm, et de préférence supérieure à 5 cm.

Selon un aspect de l'invention, la couche de jonction a une épaisseur comprise entre 0,05 mm et 1 mm.

Selon un aspect de l'invention, le matériau de jonction est choisi parmi une liste comprenant un polymère chargé en particules électriquement conductrices, un polymère chargé en particules métalliques, un polymère chargé en particules d'argent, un polymère chargé en fibres de carbone métallisées, un polymère chargé en fibres de cuivre, un polymère chargé en fibres de cuivres tissées.

Selon un aspect de l'invention, les premières fibres s'étendent dans la direction principale.

Selon un aspect de l'invention, les première fibres s'étendent sensiblement dans une direction de fibre formant un angle de fibre avec la direction principale, ledit angle de fibre étant compris entre 0 degré et 45 degrés, et de préférence compris entre 0 degré et 10 degrés.

Selon un aspect de l'invention, la bande composite a une forme de trapèze ayant deux bords latéraux qui s'étendent dans des directions parallèles l'une avec l'autre et deux bords d'extrémité qui appartiennent aux extrémités de la bande composite et qui s'étendent dans des directions convergentes l'une vers l'autre, la couche de jonction s'étendant parallèlement à chaque bord d'extrémité.

Selon un aspect de l'invention, les bords d'extrémité forment un angle de convergence compris entre 0,1 degré et 20 degrés, et de préférence entre 0,1 degré et 5 degrés.

Selon un aspect de l'invention, la bande composite comprend en outre une portion latérale dans une direction secondaire sensiblement perpendiculaire à la direction principale, ladite portion latérale ne comprenant pas lesdites premières fibres et comprenant des deuxièmes fibres noyées dans la matrice, lesdites deuxièmes fibres étant formées d'un deuxième matériau non conducteur d'électricité.

Selon un aspect de l'invention, le deuxième matériau est du verre.

L'invention se rapporte également à un procédé pour former une jonction entre une première conduite et une deuxième conduite. Chaque conduite comprend un tube creux interne et une couche de chauffage située dans l'épaisseur de ladite conduite, ladite couche de chauffage comprenant des fibres formées d'un matériau conducteur.

Dans le procédé, on fournit une bande composite s'étendant dans une direction principale entre des première et deuxième extrémités, ladite bande composite comprenant une bande principale comprenant des premières fibres noyées dans une matrice, lesdites premières fibres en carbone, matériau conducteur d'électricité, ladite matrice étant composée d'au moins un polymère, et ladite bande composite comprenant en outre une couche de jonction formée d'un matériau de jonction conducteur d'électricité, ladite couche de jonction étant disposée sur la bande principale.

Dans le procédé, on effectue une jonction électrique entre les première et deuxième conduites en effectuant l'étape suivante : on applique la bande composite sur chaque couche de chauffage ou sur une couche disposée précédemment sur lesdites couches de chauffage par enroulement autour des tubes, et dans laquelle la couche de jonction de la bande composite est mise en contact avec la couche de chauffage de la première conduite et avec la couche de chauffage de la deuxième conduite.

Dans divers modes de réalisation du procédé selon l'invention, on peut éventuellement avoir recours en outre à l'une et/ou à l'autre des dispositions suivantes.

Selon un aspect de l'invention, la couche de jonction est disposée uniquement aux extrémités de la bande composite, et la couche de jonction de la première extrémité est mise en contact avec la couche de chauffage de la première conduite et la couche de jonction de la deuxième extrémité est mise en contact avec la couche de chauffage de la deuxième conduite.

Selon un aspect de l'invention, chaque conduite a une extrémité de forme sensiblement conique au moins dans l'épaisseur de la couche de chauffage, et dans lequel on choisit une bande composite ayant une forme de trapèze ayant une géométrie adaptée aux formes des extrémités des conduites pour que lors de l'étape de jonction électrique, la bande composite forme une jonction ayant une forme sensiblement complémentaire aux extrémités coniques des couches de chauffage des conduites par l'enroulement de la bande composite en forme de trapèze autour des tubes.

Selon un aspect de l'invention, les première et deuxième extrémités des conduites sont d'abord usinées pour dégager une portion cylindrique de chaque tube et pour réaliser une forme conique dans au moins la couche de chauffage de chaque tube.

Selon un aspect de l'invention, avant l'étape de jonction électrique, on effectue une étape de soudage du tube de la première conduite avec le tube de la deuxième conduite.

Selon un aspect de l'invention, on effectue une étape de jonction d'isolation après l'étape de soudage et avant l'étape de jonction électrique, dans laquelle on applique une bande isolante comprenant des deuxièmes fibres noyées dans une matrice, lesdites deuxièmes fibres étant formées d'un deuxième matériau non conducteur d'électricité, ledit deuxième matériau étant par exemple du verre.

Selon un aspect de l'invention, après l'étape d'application d'une bande composite, on effectue une étape de chauffage durant laquelle on chauffe la bande composite appliquée entre les première et deuxième conduites pour réticuler la matrice de la bande composite.

L'invention se rapporte également à un procédé pour former une jonction entre une première conduite et une deuxième conduite, dans lequel chaque conduite comprend un tube creux interne et une couche de chauffage située dans l'épaisseur de ladite conduite, ladite couche de chauffage comprenant des fibres formées d'un matériau conducteur.

Dans le procédé, on fournit une bande principale comprenant des premières fibres noyées dans une matrice, lesdites premières fibres étant formées d'un matériau conducteur d'électricité, et ladite matrice étant composée d'au moins un polymère.

Dans le procédé, on effectue une jonction électrique entre les première et deuxième conduites en effectuant les étapes suivantes :

- on applique une couche de jonction sur chaque couche de chauffage ou autour d'une couche disposée précédemment sur lesdites couches de chauffage, chaque couche de jonction étant composée d'un matériau de jonction conducteur d'électricité, et les couches de jonction sont mises en contact avec la couche de chauffage de la première conduite et avec la couche de chauffage de la deuxième conduite, et
- on applique la bande principale sur ladite couche de jonction par enroulement autour des tubes.

**BREVE DESCRIPTION DES DESSINS**

D'autres caractéristiques et avantages de l'invention apparaîtront au cours de la description suivante d'au moins un de ses modes de réalisation, donné à titre d'exemple non limitatif, en regard des dessins joints.

Sur les dessins :

- la figure la est une vue en coupe longitudinale d'une conduite chauffante composite;
- la figure 1b est une vue transversale de côté de la conduite de la figure la ;
- la figure 2 est une vue en plan d'une bande composite selon un premier mode de réalisation de l'invention ;
- la figure 3 est une vue en coupe de la figure 2 ;
- la figure 4 est une vue en plan d'une bande composite selon un deuxième mode de réalisation de l'invention ;
- la figure 5 est une vue en plan d'une bande composite selon un troisième mode de réalisation de l'invention ;
- les figures 6 à 9 représentent des coupes similaires à la figure 3 de variantes de bande composites qui peuvent s'appliquer à chacun des modes de réalisation des figures 2 à 5 ;
- la figure 10 est une vue en coupe longitudinale d'une conduite chauffante composite préparée pour être jointe à une autre conduite chauffante ;
- la figure 11 est une vue en coupe longitudinale de deux conduites chauffantes du type de la figure 6 dont les tube sont soudés bout à bout ;
- la figure 12 est une vue en coupe longitudinale de deux conduites chauffantes du type de la figure 6 dont les extrémités ont été jointes par une jonction ayant une couche conductrice ;
- la figure 13 est une vue agrandie de la jonction de la figure 8 montrant la pluralité de couches élémentaires que forme la bande composite lors de l'enroulement autour du tube.

Sur les différentes figures, les mêmes références numériques désignent des éléments identiques ou similaires.

**DESCRIPTION DETAILLEE DE MODES DE REALISATION**

Dans la présente description, les termes « avant » et « arrière » sont utilisés par rapport à la direction longitudinale X. Les termes « supérieur » ou « vers le haut » et « inférieur » ou « vers le bas » sont utilisés par rapport à la direction verticale Z, vers le haut, perpendiculaire à la direction longitudinale X et à la direction transversale Y.

Le terme « conduite » de la présente invention doit être compris comme étant un dispositif comprenant un tube pour transporter un fluide au moins entre une entrée et une sortie, le dispositif pouvant comporter d'autres éléments, tel qu'une vanne, ou des dérivations multiples.

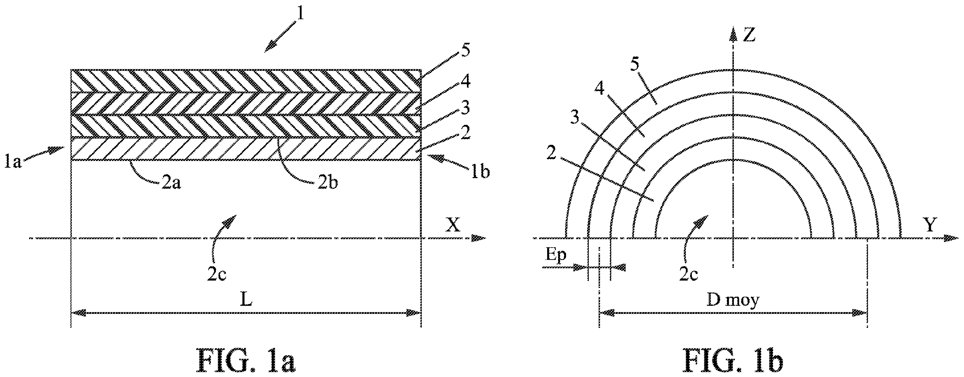

Les **figures 1a et 1b présentent une conduite 1** du type chauffante et comprenant un matériau composite, représentée en coupe longitudinale selon un plan XZ et en coupe transversale selon un plan YZ. Dans ces figures, seule une moitié supérieure au dessus de l'axe X est présentée, l'autre moitié inférieure étant sensiblement identique par symétrie par rapport à l'axe X.

La conduite 1 comprend un tube 2 creux, s'étendant dans la direction longitudinale d'axe X entre une première et deuxième extrémité 1a, 1b de la conduite. Ce tube 2 comprend une surface interne 2a à proximité de l'axe X, et une surface externe 2b plus éloignée de l'axe X. A l'intérieur de la surface interne 2a s'étend une cavité 2c entre une entrée et une sortie de la cavité situées à chacune des extrémités. La cavité 2c est adaptée pour transporter le fluide entre lesdites entrée et sortie.

La conduite 1 a une section de forme sensiblement cylindrique dans le plan YZ, mais d'autres formes pourraient être réalisées.

Le tube 2 peut être réalisé avec un matériau électriquement conducteur, tel que de l'acier, comme cela est représenté sur les figures pour le présent mode de réalisation de la conduite.

Le tube 2 peut être réalisé avec un matériau électriquement isolant, par exemple un polymère. Ce matériau peut avantageusement être un polyamide (PA), ou un polyfluorure de vinylidène (PVDF).

Sur ce tube 2, il y a par exemple les couches suivantes, depuis l'intérieur (proche de l'axe X) vers l'extérieur (à distance de l'axe X) :

- une première couche d'isolation 3,
- une couche de chauffage 4, et
- une deuxième couche d'isolation 5.

Les première et deuxième couches d'isolation électrique 3, 5 sont électriquement isolantes. Elles sont par exemple constituées d'un polymère ou d'un composite comprenant des fibres de verre noyées dans le polymère (matrice) ou d'un composite comprenant des fibres de kevlar noyées dans le polymère. Le polymère est avantageusement adapté pour bien adhérer aux autres couches : le tube 2 et la couche de chauffage 4. Ce polymère est éventuellement identique à celui utilisé dans la couche de chauffage 4 et/ou dans le tube 2 comme cité ci-dessus.

La couche de chauffage 4 est un composite comprenant au moins des fibres de carbone noyées dans un polymère. Ce polymère peut avantageusement être un polyamide (PA), ou un polyfluorure de vinylidène (PVDF).

Les fibres de carbone sont aptes à conduire un courant électrique pour chauffer le tube par effet Joule. La résistance électrique $R$ d'une telle couche de chauffage 4 entre les première et deuxième extrémités (1a, 1b) de la conduite peut être calculée de manière approchée par la formule suivante :

$$R = \rho_{fibre} \cdot \frac{L}{\pi . D_{moy} . E_p . cos^2 \alpha.}$$

dans laquelle :

- $\rho_{fibre}$ est une résistivité des fibres de carbone, ayant par exemple pour valeur $\rho_{fibre} = 1,9.10^{-5}\ \Omega.m$ à une température de 20°C, ce qui est sensiblement 1100 fois plus résistif que le cuivre à 20°C,
- $L$ est une longueur de la couche de chauffage 4 entre les première et deuxième extrémités (1a, 1b) selon la direction longitudinale X,
- $D_{moy}$ est un diamètre moyen de la couche de chauffage 3,
- $E_p$ est une épaisseur de la couche de chauffage dans une direction transversale, et
- $\alpha$ est un angle d'inclinaison que forment les fibres de carbone par rapport à la direction de l'axe X.

Grâce à l'angle d'inclinaison des fibres de carbone dans la couche de chauffage 4, on peut obtenir une résistance électrique $R$ désirée pour le chauffage.

Grâce à cette couche de chauffage 4 comprenant des fibres de carbone bien réparties dans le matériau polymère de cette couche, le chauffage est plus homogène autour du tube 2. En outre, si une ou plusieurs fibres de carbone étaient rompues à un endroit de la conduite, le courant électrique peut tout de même continuer à passer par les autres fibres de carbone, non rompues. Ainsi, les caractéristiques électriques (résistance) sont peu dégradées.

Les différentes couches de la conduite 1 peuvent être fabriquées par des moyens connus en utilisant des bandes préformées de composite, chaque bande préformée s'étendant selon une direction et comprenant des fibres (carbone, verre ou kevlar) noyées dans une matrice de polymère. Les fibres sont éventuellement orientées dans ladite direction de la bande préformée.

La présente invention a pour but d'utiliser également des bandes composites pour effectuer une jonction mécanique et électrique entre les couches de deux conduites 1 mises bout à bout.

Notamment, l'invention a pour but d'utiliser une **bande composite 10** particulière pour effectuer la jonction entre la couche de chauffage 4 de la première conduite et la couche de chauffage 4 de la deuxième conduite.

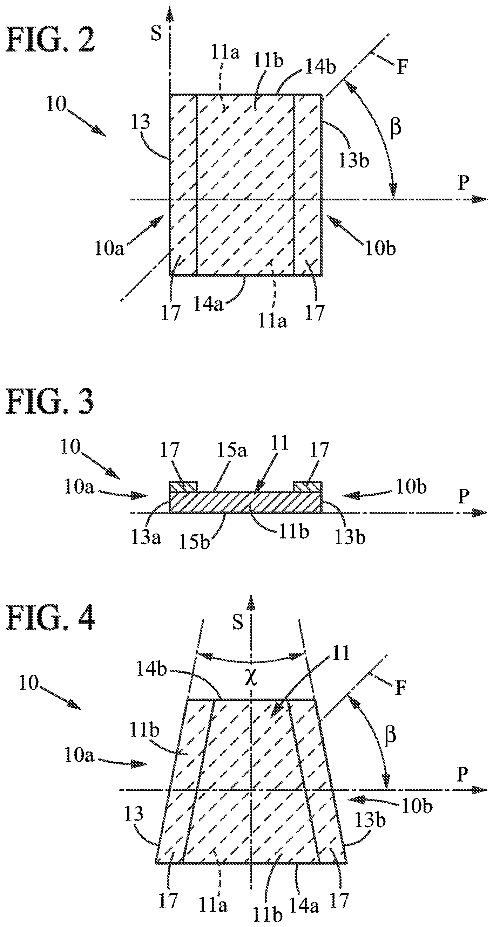

**En figure 2**, la bande composite 10 s'étend dans une direction principale P entre des première et deuxième extrémités 10a, 10b, la première extrémité étant opposée à la première extrémité dans la direction principale P. Chaque extrémité 10a, 10b comprend un bord d'extrémité 13a, 13b, respectivement. Dans une direction secondaire S sensiblement perpendiculaire à la direction principale P, elle comprend en outre deux bords latéraux 14a, 14b opposés l'un à l'autre. Les bords latéraux 14a, 14b s'étendent entre les deux extrémités 10a, 10b de la bande composite. La bande composite 10 a ainsi par exemple une forme générale de quadrilatère, qui peut être un carré, un rectangle ou un trapèze.

La bande composite 10 comprend premièrement des fibres 11a (premières fibres) noyées dans une matrice 11b. La matrice 11b et les fibres 11a forment un ensemble, nommé bande principale 11, ayant une forme sensiblement plane dans un plan de directions P-S. La bande principale 11 possède ainsi une face supérieure 15a et une face inférieure 15b.

Ces premières fibres 11a sont formées d'un premier matériau conducteur d'électricité et s'étendent dans une direction de fibres F. Le premier matériau conducteur est avantageusement du carbone, comme pour les fibres de la couche de chauffage 4 de la conduite 1.

La matrice 11b est composée d'au moins un polymère. Le polymère peut avantageusement être un polyamide (PA) ou un polyfluorure de vinylidène (PVDF), comme pour la matrice de la couche de chauffage 4 de la conduite 1.

La bande composite 10 du premier mode de réalisation de la figure 2 comprend en outre à proximité de chacune des extrémités ou bords d'extrémités 13a, 13b une couche de jonction 17 formée d'un matériau de jonction également conducteur d'électricité. Cette couche de jonction 17 est située au dessus de la bande principale 11, c'est-à-dire au dessus des premières fibres 11a et de la matrice 11b. Cette couche de jonction 17 a pour but d'améliorer la conduction électrique de la bande composite 10 à ses extrémités, destinées à être en contact avec une couche de chauffage 4 d'une conduite 1.

Cette couche de jonction 17 est visible en coupe sur la **figure 3**. Elle a une forme de bande qui s'étend le long de chaque extrémité 10a, 10b, chacune ayant une largeur dans la direction principale P par exemple de 1 cm ou plus, et par exemple supérieure à 5 cm. Elle a une épaisseur comprise entre 0,05 mm et 1 mm.

Cette bande composite 10 est donc un composé prêt à l'emploi pour effectuer la jonction entre les couches de chauffages 4 de deux conduites 1.

Le matériau de jonction est avantageusement un polymère chargé en particules électriquement conductrices, ou un polymère chargé en particules métalliques, ou un polymère chargé en particules d'argent, ou un polymère chargé en fibres de carbones métallisées, ou un polymère chargé en fibres de cuivres, ou un polymère chargé avec des fibres de cuivre tissées.

Les particules sont des éléments de petite taille de forme sphérique, elliptique ou toute autre forme. Elles ont une taille (plus grande distance) par exemple inférieure à 0,1 mm, et de préférence inférieure à 0,01 mm. Ces particules peuvent ainsi être mélangées ou chargées dans un polymère sans trop affecter sa viscosité. Ces particules sont donc sous forme de poudre.

Lors d'une étape de transformation de la bande composite par chauffage, le matériau de jonction de la couche de jonction 17 va se lier intimement avec la matrice et avec les premières fibres 11a, pour améliorer la conduction électrique d'une zone autour de ladite couche de jonction 17 en extrémité de la bande composite 10. Le contact et la conduction électrique avec une couche de chauffage 4 d'une conduite 1 sont ainsi grandement améliorés.

Les premières fibres 11a s'étendent éventuellement dans la direction principale P de la bande composite 10. La bande composite est ainsi plus facile à réaliser.

Les premières fibres 11a s'étendent avantageusement dans une direction de fibre F inclinée par rapport à la direction principale P, avec un angle de fibres $\beta$ prédéterminé. L'ange de fibre $\beta$ est par exemple compris entre 0 degré et 45 degrés. Avantageusement, il est compris entre 0 degré et 10 degré.

L'angle de fibre $\beta$ de la bande composite est éventuellement différent de l'angle d'inclinaison $\alpha$ des fibres de carbone de la couche de chauffage 4 des conduites 1. Notamment, l'angle de fibre $\beta$ est avantageusement inférieur à l'angle d'inclinaison $\alpha$. La résistance électrique linéique dans la direction de l'axe X de la jonction 6 est alors inférieure à la résistance électrique linéique de la conduite. Les échauffements au niveau de la jonction sont ainsi réduits, et peuvent même être supprimés.

Selon le mode de réalisation de la **figure 2,** la bande composite 10 a une forme rectangulaire.

Selon le mode de réalisation de la **figure 4,** la bande composite 10 a une forme en trapèze : les bords d'extrémité 13a, 13b s'étendent dans des directions convergentes l'une vers l'autre, en formant un angle de convergence $\chi$ par exemple compris entre 0,1 degré et 20 degrés, et de préférence entre 0,1 degré et 5 degrés.

Cet angle de convergence est avantageusement adapté aux formes des couches de chauffages 4 des conduites 1 destinées à être jointes.

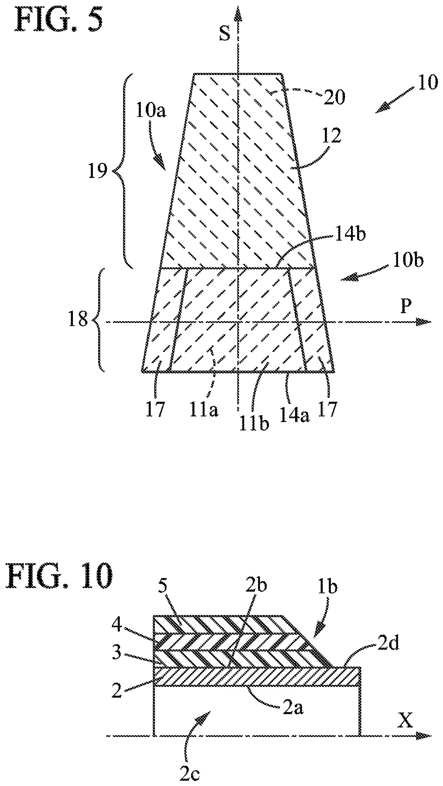

Selon le mode de réalisation de la **figure 5,** la bande composite 10 comprend :

- une portion principale 18 correspondant à la bande composite 10 des modes de réalisation des figures 2 à 4, c'est-à-dire comprenant des premières fibres 11a conductrices, et

- une portion secondaire 19 qui s'étend dans la direction secondaire S depuis le bord latéral 14a de la portion principale 18, ladite portion secondaire 19 ne comprenant pas lesdites premières fibres et comprenant des deuxièmes fibres 20 noyées dans la matrice 11b, lesdites deuxièmes fibres 20 étant formées d'un deuxième matériau non conducteur d'électricité.

Le deuxième matériau est par exemple du verre.

La bande composite 10 est un ensemble continu de matière comprenant de manière continue et juxtaposée les première et deuxième portions 18, 20. Cette bande composite 10 est ainsi prête à l'emploi pour former une jonction entre deux couches de chauffages 4 et une jonction entre deux couches d'isolations 3 ou 5.

Grâce à cette bandes composite, il est possible de réaliser une jonction de plusieurs ou toutes les couches par un seul enroulement de la bande composite 10 spécifique, et notamment la réalisation d'une jonction d'une couche isolante et d'une couche de chauffage (entre deux conduites).

Selon un autre mode de réalisation (non représenté), la bande composite comprend une portion principale 18 et deux portions secondaires 19 de part et d'autre de ladite portion principale 18, dans la direction secondaire.

Grâce à cette bande composite, il est possible de réaliser une jonction de plusieurs ou toutes les couches par un seul enroulement de la bande composite 10 spécifique, et notamment la réalisation d'une jonction de la couche de chauffage 4 et les deux couches d'isolation 3 et 5 de part et d'autres de la couche de chauffage (entre deux conduites).

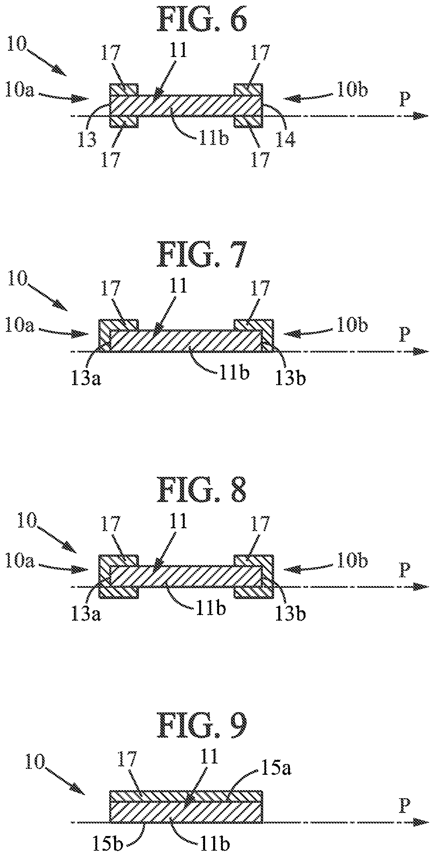

Selon des variantes de tous les précédents modes de réalisation de la bande composite, la couche de jonction 17 peut être située en divers lieux sur (ou au contact) de la bande principale 11. Les **figures 6 à 9** montrent des coupes similaires à la coupe de la figure 3, et qui explicitent ces divers lieux.

Dans la variante de la figure 6, la couche de jonction 17 est située à chacune des extrémités 10a, 10b, selon des bandes s'étendant le long des bords d'extrémité, et disposée sur la face supérieure 15a et sous la face inférieure 15b de la bande principale 11. La couche de jonction 17 comprend ainsi quatre bandes.

Dans la variante de la figure 7, la couche de jonction est située à chacune des extrémités 10a, 10b, selon des bandes s'étendant le long des bords d'extrémité, et recouvre une bande de la face supérieure 15a et le bord d'extrémité 13a, 13b. La couche de jonction 17 comprend ainsi deux bandes de section en forme de « L ».

Dans la variante de la figure 8, la couche de jonction 17 est située à chacune des extrémités 10a, 10b, selon des bandes s'étendant le long des bords d'extrémité, sur la face supérieure 15a, sous la face inférieure 15b, et sur le bord d'extrémité 13a, 13b pour relier les bandes des faces inférieure et supérieure. La couche de jonction 17 comprend donc deux bandes de section en forme de « C » qui inclut chaque bord d'extrémité.

Dans la variante de la figure 9, la couche de jonction 17 est située sur toute la surface de la face supérieure 15a (et/ou face inférieure 15b). Elle relie ainsi chaque extrémité 10a, 10b. La couche de jonction 17 recouvre donc toute ladite surface de la bande principale 11.

Dans chacune de ces variantes, la conduction électrique réalisable dans une jonction entre deux conduites avec une telle bande composite est ainsi réduite.

**Un procédé pour former une jonction** entre deux conduites 1 du type de la figure 1 va maintenant être explicité. Ces conduites 1 comprennent un tube 2 creux interne et des couches successives de matériaux. Une des couches est une couche de chauffage 4 permettant le chauffage de la conduite par conduction électrique. Cette couche de chauffage 4 est située dans l'épaisseur de la conduite, c'est-à-dire dans une plage de distance radiale par rapport à l'axe X de la conduite. La couche de chauffage 4 comprend des fibres en matériau conducteur, tel que des fibres de carbone.

Ce procédé met en oeuvre une des bandes composites 10 précédemment décrites pour relier les couches de chauffage 4 de deux conduites 1 mises bout à bout.

Notamment, le procédé comprend un processus de jonction électrique dans lequel on effectue au moins l'étape suivante :

- On applique la bande composite 10 sur chaque couche de chauffage 4 ou sur une couche disposée précédemment sur lesdites couches de chauffage par enroulement autour des tubes 2. La couche de jonction 17 de la bande composite 10 est alors mise en contact avec la couche de chauffage 4 de la première conduite et avec la couche de chauffage 4 de la deuxième conduite.

Les **figures 10 à 13** montrent un exemple plus détaillé de mise en oeuvre de ce procédé.

En figure 10, la deuxième extrémité 1b d'une conduite 1 est formée par exemple avec la forme présentée soit en usine soit au moment de la jonction entre deux conduites successives (adjacentes).

Une portion cylindrique 2d de la surface externe 2b du tube est dégagée (sans couche au dessus), et les couches au dessus du tube 2 sont formées de manière conique en direction de l'extrémité 1b de la conduite.

Cette deuxième extrémité 1b est par exemple formée par usinage d'une conduite complètement cylindrique telle que présentée en figure 1.

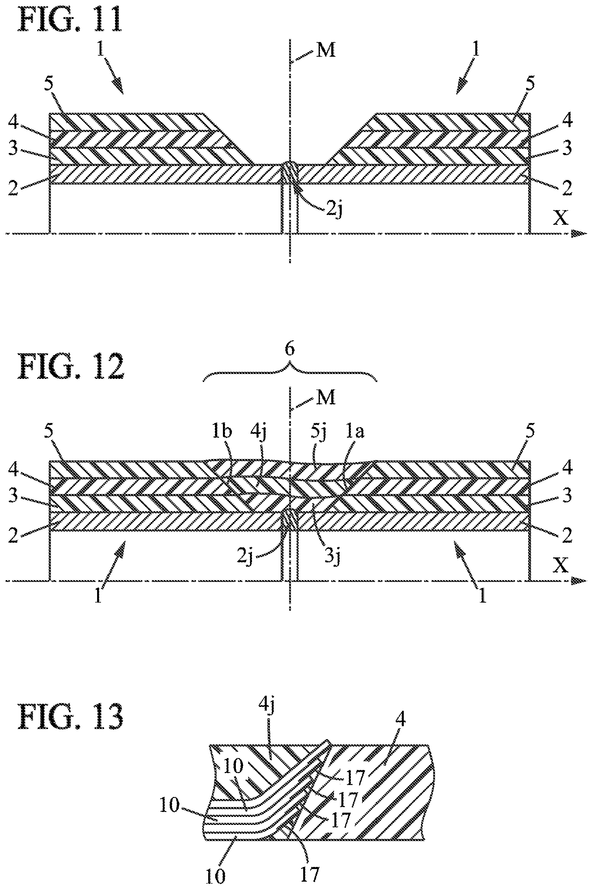

En figure 11, deux conduites 1 ayant chacune ses extrémités formées comme expliqué ci-dessus sont approchées l'une de l'autre jusqu'à être coaxiales d'axe X et en contact par leurs extrémités en un plan médian M : La deuxième extrémité 1b de la première conduite est en contact avec la première extrémité la de la deuxième conduite. Les deux tubes 2 de chaque conduite sont alors soudés ensemble dans une étape de soudage pour former un tube interne 2 continu pour le transport du fluide hydrocarbure. Une jonction de tube 2j est donc formée par soudage entre les deux tubes 2 des conduites 1.

En figure 12, des couches de jonctions sont alors réalisées sur la jonction de tube 2j pour joindre les couches respectives de chaque conduite 1. Ainsi, on effectue les étapes suivantes :

　　a) une première étape de jonction d'isolation dans laquelle on applique une bande isolante comprenant des deuxièmes fibres noyées dans une matrice de polymère, lesdites deuxièmes fibres étant formées d'un deuxième matériau non conducteur d'électricité, tel que du verre ; une première jonction de couche d'isolation 3j est ainsi réalisée et joint les premières couches d'isolation 3 des deux conduites 1 au dessus de la jonction de tube 2j ;

　　b) une étape de jonction électrique dans laquelle on applique une bande composite 10 par enroulement autour de la couche d'isolation 3j, les couches de jonctions 17 de chaque extrémité de la bande composite étant en contact avec chaque couche de chauffage 4 des deux conduites 1 ; une jonction de couche de chauffage 4j est ainsi réalisée et joint lesdites couches de chauffage 4 au dessus de la jonction de couche d'isolation 3j ; et

　　c) une deuxième étape de jonction d'isolation dans laquelle on applique une bande isolante du même type qu'à la première étape de jonction d'isolation, au dessus de la jonction de couche de chauffage 4j ; une deuxième jonction de couche d'isolation 5j est ainsi réalisée et joint les deuxièmes couches d'isolation 5 des deux conduites 1 au dessus de la jonction de couche de chauffage 4j.

Les jonctions de tube 2j, de couches d'isolation 3j, 5j et de couche de chauffage 4j forment une jonction 6 entre les deux tubes 1 qui reproduit l'empilement des couches de chacune des conduites 1 pour former une continuité mécanique et électrique (conduction et isolation) entre les conduites 1.

En outre, entre chacune des étapes précédentes ou en dernière étape, on effectue éventuellement une étape de chauffage de la jonction 6 entre les première et deuxième conduites 1 pour réticuler ou solidifier les matrices 11b.

Chaque jonction de couche d'isolation 3j, 5j et de chauffage 4j peut être réalisée avec des bandes appropriées indépendantes. C'est-à-dire une bande composite isolante pour chaque jonction de couche d'isolation 3j, 5j, et une bande composite 10 du type de la figure 2 ou de la figure 4 pour la jonction de couche de chauffage 4j.

Eventuellement, une seule bande composite 10 du type de la figure 5, comprenant deux portions secondaires 19 peut être utilisée pour former en un seul enroulement les trois couches de la jonction 6.

Dans le cas tel que présenté sur les figures, dans lequel la jonction 6 a une forme conique, une bande composite 10 ayant une forme en trapèze peut être avantageusement utilisée. De cette manière, à chaque tour de l'enroulement de la bande dans la jonction 6, comme représenté en figure 13, les bords d'extrémités 13a, 13b se décalent naturellement, ce qui permet une meilleure mise en contact de la couche de jonction 17 avec les couches de chauffage 4 de chaque conduite 1. Cela permet également d'avoir une diffusion du matériau de la couche de jonction 17 sur toute la surface de contact avec chaque couche de chauffage 4. Cela améliore la conductivité de cette jonction de couche de chauffage 4j (réduction de la résistance électrique de contact).

La forme en trapèze de la bande composite 10 est avantageusement adaptée aux formes des extrémités des conduites 1, de telle sorte que lors de l'enroulement de la bande composite 10, celle-ci forme une jonction 6 de forme complémentaire auxdites extrémités des conduites. Notamment, les diamètres de conduites, l'épaisseur de la bande composite 10, et la forme des extrémités des conduites doivent être prises en comptes pour établir la forme de trapèze de la bande composite 10.

**Un autre procédé pour former une jonction** entre deux conduites 1 du type de la figure 1 va maintenant être explicité.

Ce procédé plus met en oeuvre une bande principale 11 précédemment décrite. L a couche de jonction 17 est réalisée directement sur les conduites 1 préalablement à l'enroulement de la bande principale 11 autour des conduites 1.

Notamment, le procédé comprend un processus de jonction électrique dans lequel on effectue au moins les étapes suivantes :

- On applique une couche de jonction 17 sur chaque couche de chauffage 4 ou autour d'une couche disposée précédemment sur lesdites couches de chauffage (4), chaque couche de jonction 17 étant composée d'un matériau de jonction conducteur d'électricité, et les couches de jonction 17 sont mises en contact avec la couche de chauffage 4 de la première conduite et avec la couche de chauffage 4 de la deuxième conduite, et
- on applique la bande principale 11 sur ladite couche de jonction 17 par enroulement autour des tubes.

Ce procédé nécessite uniquement une bande principale 11 et le matériau de la couche de jonction. Il n'est donc pas nécessaire d'avoir une bande composite 10 préparée en avance et intégrant une couche de jonction 17. Cependant c e procédé est plus long à mettre en oeovre sur le terrain.

Enfin, il est possible avec une ou plusieurs bande composites 10 et/ou bandes principales 11, telles que présentées dans la présente description, de former des jonctions entre des conduites sensiblement identiques et ayant plusieurs couches chauffantes dans l'épaisseur des conduites.

Notamment, une bande composite 10 ayant une alternance de portions isolantes (telles que la portion secondaire 19) et de portions conductrices (telles que la portion principale 18) est réalisable. On réalise ainsi la jonction de toutes les couches, et notamment toutes les couches de chauffage 4 par un seul et unique enroulement de ladite bande composite 10 spécifique.

## Revendications

1. **Bande composite (10)** s'étendant dans une direction principale (P) entre des première et deuxième extrémités (10a, 10b), ladite bande composite comprenant une bande principale (11) comprenant des premières fibres (11a) noyées dans une matrice (11b), lesdites premières fibres étant en carbone, matériau conducteur d'électricité, et ladite matrice étant composée d'au moins un polymère, et ladite bande composite comprenant en outre une couche de jonction (17) formée d'un matériau de jonction conducteur d'électricité
ladite bande composite **étant caractérisée en ce que** ladite couche de jonction est disposée sur la bande principale, uniquement aux première et deuxième extrémités (10a, 10b) de la bande composite.

2. Bande composite selon la revendication 1, dans laquelle la couche de jonction (17) a la forme de bandes s'étendant le long des première et deuxième extrémités (10a, 10b), chacune desdites bandes ayant une largeur dans la direction principale supérieure à 1 cm, et de préférence supérieure à 5 cm.

3. Bande composite selon l'une des revendications 1 à 2, dans laquelle la couche de jonction (17) a une épaisseur comprise entre 0,05 mm et 1 mm.

4. Bande composite selon l'une des revendications 1 à 3, dans laquelle le matériau de jonction est choisi parmi une liste comprenant un polymère chargé en particules électriquement conductrices, un polymère chargé en particules métalliques, un polymère chargé en particules d'argent, un polymère chargé en fibres de carbone métallisées, un polymère chargé en fibres de cuivre, un polymère chargé en fibres de cuivres tissées.

5. Bande composite selon l'une des revendications 1 à 4, dans laquelle les premières fibres (11) s'étendent sensiblement dans la direction principale.

6. Bande composite selon l'une des revendications 1 à 5, dans laquelle les première fibres (11) s'étendent dans une direction de fibre (F) formant un angle de fibre (β) avec la direction principale, ledit angle de fibre étant compris entre 0 degré et 45 degrés, et de préférence compris entre 0 degré et 10 degrés.

7. Bande composite selon l'une des revendications 1 à 6, dans laquelle la bande composite (10) a une forme de trapèze ayant deux bords latéraux (14a, 14b) qui s'étendent dans des directions parallèles l'une avec l'autre et deux bords d'extrémité (13a, 13b) qui appartiennent aux extrémités de la bande composite et qui s'étendent dans des directions convergentes l'une vers l'autre, la couche de jonction (17) s'étendant parallèlement à chaque bord d'extrémité.

8. Bande composite selon la revendication 7, dans laquelle les bords d'extrémité (13a, 13b) forment un angle de convergence (χ) compris entre 0,1 degré et 20 degrés, et de préférence entre 0,1 degré et 5 degrés.

9. Bande composite selon l'une des revendications 1 à 8, comprenant en outre une portion latérale (19) dans une direction secondaire (S) sensiblement perpendiculaire à la direction principale (P), ladite portion latérale ne comprenant pas lesdites premières fibres et comprenant des deuxièmes fibres (20) noyées dans la matrice, lesdites deuxièmes fibres étant formées d'un deuxième matériau non conducteur d'électricité.

10. Bande composite selon la revendication 9, dans laquelle le deuxième matériau est du verre.

11. **Procédé pour former une jonction** entre une première conduite et une deuxième conduite dans lequel chaque conduite (1) comprend un tube (2) creux interne et une couche de chauffage (4) située dans l'épaisseur de ladite conduite, **caractérisé en ce que** ladite couche de chauffage (4) comprend des fibres formées d'un matériau conducteur, et **en ce que**:

- on fournit une bande composite (10) s'étendant dans une direction principale (P) entre des première et deuxième extrémités (10a, 10b), ladite bande composite comprenant une bande principale (11) comprenant des premières fibres (11a) noyées dans une matrice (11b), lesdites premières fibres étant en carbone, matériau conducteur d'électricité, ladite matrice étant composée d'au moins un polymère, et ladite bande composite comprenant en outre une couche de jonction (17) formée d'un matériau de jonction conducteur d'électricité, ladite couche de jonction étant disposée sur la bande principale,
- on effectue une jonction électrique entre les première et deuxième conduites en effectuant l'étape suivante :

-- on applique la bande composite (10) sur chaque couche de chauffage (4) ou sur une couche disposée précédemment sur lesdites couches de chauffage par enroulement autour des tubes (2), et dans lequel la couche de jonction (17) de la bande composite est mise en contact avec la couche de chauffage (4) de la première conduite et avec la couche de chauffage (4) de la deuxième conduite.

12. Procédé selon la revendication 11, dans lequel la couche de jonction (17) est disposée uniquement aux extrémités (10a, 10b) de la bande composite, et dans lequel la couche de jonction (17) de la première extrémité (10a) est mise en contact avec la couche de chauffage (4) de la première conduite et la couche de jonction de la deuxième extrémité (10b) est mise en contact avec la couche de chauffage (4) de la deuxième conduite.

13. Procédé selon la revendication 11 ou la revendication 12, dans lequel chaque conduite (1) a une extrémité de forme sensiblement conique au moins dans l'épaisseur de la couche de chauffage, et dans lequel on choisit une bande composite (10) ayant une forme de trapèze ayant une géométrie adaptée aux formes des extrémités des conduites pour que, lors de l'étape de jonction électrique, la bande composite (10) forme une jonction ayant une forme sensiblement complémentaire aux extrémités coniques des couches de chauffage des conduites par l'enroulement de la bande composite en forme de trapèze autour des tubes.

14. Procédé selon l'une des revendications 11 à 13, dans lequel les première et deuxième extrémités (1a, 1b) des conduites (1) sont d'abord usinées pour dégager une portion cylindrique de chaque tube et pour réaliser une forme conique dans au moins la couche de chauffage (4) de chaque tube (2).

15. Procédé selon l'une des revendications 11 à 14, dans lequel, avant l'étape de jonction électrique, on effectue une étape de soudage du tube (2) de la première conduite avec le tube (2) de la deuxième conduite.

16. Procédé selon la revendication 15, dans lequel on effectue une étape de jonction d'isolation après l'étape de soudage et avant l'étape de jonction électrique, dans laquelle on applique une bande isolante comprenant des deuxièmes fibres noyées dans une matrice, lesdites deuxièmes fibres étant formées d'un deuxième matériau non conducteur d'électricité, ledit deuxième matériau étant par exemple du verre.

17. Procédé selon l'une des revendications 11 à 16, dans lequel après l'étape d'application d'une bande composite, on effectue une étape de chauffage durant laquelle on chauffe ladite bande composite appliquée entre les première et deuxième conduites (1) pour réticuler la matrice (11b) de la bande composite.

18. **Procédé pour former une jonction** entre une première conduite et une deuxième conduite, et dans lequel chaque conduite (1) comprend un tube (2) creux interne et une couche de chauffage (4) située dans l'épaisseur de ladite conduite, **caractérisé en ce que** ladite couche de chauffage (4) comprend des fibres formées d'un matériau conducteur, et **en ce que**:

   - on fournit une bande principale (11) comprenant des premières fibres (11a) noyées dans une matrice (11b), lesdites premières fibres étant en carbone, matériau conducteur d'électricité, et ladite matrice étant composée d'au moins un polymère, et
   - on effectue une jonction électrique entre les première et deuxième conduites en effectuant les étapes suivantes :

   -- on applique une couche de jonction (17) sur chaque couche de chauffage (4) ou autour d'une couche disposée précédemment sur lesdites couches de chauffage (4), chaque couche de jonction (17) étant composée d'un matériau de jonction conducteur d'électricité, et les couches de jonction (17) sont mises en contact avec la couche de chauffage (4) de la première conduite et avec la couche de chauffage (4) de la deuxième conduite, et
   -- on applique la bande principale (11) sur ladite couche de jonction (17) par enroulement autour des tubes.

**Patentansprüche**

1. Verbundstreifen (10), der sich in einer Hauptrichtung (P) zwischen einem ersten und zweiten Ende (10a, 10b) erstreckt, wobei der Verbundstreifen einen Hauptstreifen (11) aufweist, der in einer Matrix (11b) eingebettete erste Fasern (11a) aufweist, wobei die ersten Fasern aus Kohlenstoff, einem elektrizitätsleitenden Material, sind und die Matrix zumindest aus einem Polymer zusammengesetzt ist, und wobei der Verbundstreifen ferner eine Verbindungsschicht (17) aufweist, die aus einem elektrizitätsleitenden Verbindungsmaterial besteht,
wobei der Verbundstreifen **dadurch gekennzeichnet ist, dass** die Verbindungsschicht auf dem Hauptstreifen nur an dem ersten und zweiten Ende (10a, 10b) des Verbundstreifens angeordnet ist.

2. Verbundstreifen nach Anspruch 1, in welchem die Verbindungsschicht (17) die Form von Streifen hat, die sich entlang des ersten und zweiten Endes (10a, 10b) erstrecken, wobei jeder der Streifen eine Breite in der Hauptrichtung hat, die größer als 1 cm und bevorzugt größer als 5cm ist.

3. Verbundstreifen nach einem der Ansprüche 1 bis 2, in welchem die Verbindungsschicht (17) eine Dicke zwischen 0,05mm und 1mm hat.

4. Verbundstreifen nach einem der Ansprüche 1 bis 3, in welchem das Verbindungsmaterial aus einer Liste ausgewählt ist, die aufweist: mit elektrisch leitenden Partikeln beladenes Polymer, mit metallischen Partikeln beladenes Polymer, mit Silberpartikeln beladenes Polymer, mit metallisierten Karbonfasern beladenes Polymer, mit Kupferfasern beladenes Polymer, mit gesponnenen Kupferfasern beladenes Polymer.

5. Verbundstreifen nach einem der Ansprüche 1 bis 4, in welchem sich die ersten Fasern (11) im Wesentlichen in der Hauptrichtung erstrecken.

6. Verbundstreifen nach einem der Ansprüche 1 bis 5, in welchem sich die ersten Fasern (11) in einer Faserrichtung (F) erstrecken, die einen Faserwinkel (β) mit der Hauptrichtung bildet, wobei der Faserwinkel zwischen 0 Grad und 45 Grad ist und bevorzugt zwischen 0 Grad und 10 Grad ist.

7. Verbundstreifen nach einem der Ansprüche 1 bis 6, in welchem der Verbundstreifen (10) eine Trapezform mit zwei Seitenkanten (14a, 14b), die sich in zueinander parallelen Richtungen erstrecken, und zwei Endkanten (13a, 13b) hat, die zu den Enden des Verbundstreifens gehören und sich in zueinander hin konvergierenden Richtungen erstrecken, wobei sich die Verbindungsschicht (17) parallel zu jeder Endkante erstreckt.

**8.** Verbundstreifen nach Anspruch 7, in welchem die Endkanten (13a, 13b) einen Konvergenzwinkel ($\chi$) bilden, der zwischen 0,1 Grad und 20 Grad und bevorzugt zwischen 0,1 Grad und 5 Grad ist.

**9.** Verbundstreifen nach einem der Ansprüche 1 bis 8, ferner aufweisend einen Seitenabschnitt (19) in einer sekundären Richtung (S), die im Wesentlichen senkrecht zur Hauptrichtung (P) ist, wobei der Seitenabschnitt die ersten Fasern nicht aufweist und in der Matrix eingebettete zweite Fasern (20) aufweist, wobei die zweiten Faser aus einem Elektrizität nichtleitenden zweiten Material bestehen.

**10.** Verbundstreifen nach Anspruch 9, in welchem das zweite Material Glas ist.

**11.** Verfahren zur Bildung einer Verbindung zwischen einer ersten Leitung und einer zweiten Leitung, in welchem jede Leitung (1) ein hohles Innenrohr (2) und eine in der Dicke der Leitung angeordnete Heizschicht (4) aufweist, **dadurch gekennzeichnet, dass**
die Heizschicht (4) aus einem leitfähigen Material gebildete Fasern aufweist,
und **gekennzeichnet durch**

    - Bereitstellung eines Verbundstreifens (10), der sich in einer Hauptrichtung (P) zwischen einem ersten und zweiten Ende (10a, 10b) erstreckt, wobei der Verbundstreifen einen Hauptstreifen (11) aufweist, der in einer Matrix (11b) eingebettete erste Fasern (11a) aufweist, wobei die ersten Fasern aus Kohlenstoff, einem elektrizitätsleitenden Material, sind und die Matrix zumindest aus einem Polymer zusammengesetzt ist, und wobei der Verbundstreifen ferner eine Verbindungsschicht (17) aufweist, die aus einem elektrizitätsleitenden Verbindungsmaterial besteht, wobei die Verbindungsschicht auf dem Hauptstreifen angeordnet ist,
    - Herstellung einer elektrischen Verbindung zwischen der ersten und zweiten Leitung durch Durchführen des folgenden Schritts:

      -- Aufbringen des Verbundstreifens (10) auf jede Heizschicht (4) oder auf eine zuvor auf den Heizschichten angeordnete Schicht durch Wickeln um die Rohre (2), und wobei die Verbindungsschicht (17) des Verbundstreifens mit der Heizschicht (4) der ersten Leitung und mit der Heizschicht (4) der zweiten Leitung in Kontakt gebracht wird.

**12.** Verfahren nach Anspruch 11, in welchem die Verbindungsschicht (17) nur an den Enden (10a, 10b) des Verbundstreifens angeordnet ist und in welchem die Verbindungsschicht (17) des ersten Endes (10a) mit der Heizschicht (4) der ersten Leitung in Kontakt gebracht wird und die Verbindungsschicht des zweiten Endes (10b) mit der Heizschicht (4) der zweiten Leitung in Kontakt gebracht wird.

**13.** Verfahren nach Anspruch 11 oder Anspruch 12, in welchem jede Leitung (1) ein im Wesentlichen konisches Ende zumindest in der Dicke der Heizschicht hat und in welchem ein Verbundstreifen (10) gewählt wird, der eine Trapezform hat, die eine an die Form der Enden der Leitungen angepasste Geometrie hat, so dass beim Schritt des elektrischen Verbindens der Verbundstreifen (10) eine Verbindung bildet, die durch Wickeln des trapezförmigen Verbundstreifens um die Rohre eine zu den konischen Enden der Heizschichten der Leitungen im Wesentlichen komplementäre Form hat.

**14.** Verfahren nach einem der Ansprüche 11 bis 13, in welchem das erste und zweite Ende (1a, 1b) der Leitungen vorab bearbeitet werden, um einen zylindrischen Abschnitt jedes Rohrs freizulegen und um zumindest in der Heizschicht (4) jedes Rohrs (2) eine konische Form bereitzustellen.

**15.** Verfahren nach einem der Ansprüche 11 bis 14, in welchem vor dem Schritt des elektrischen Verbindens ein Schritt des Verschweißens des Rohrs (2) der ersten Leitung mit dem Rohr (2) der zweiten Leitung durchgeführt wird.

**16.** Verfahren nach Anspruch 15, in welchem nach dem Schritt des Verschweißens und vor dem Schritt des elektrischen Verbindens ein Isolationsverbindungsschritt durchgeführt wird, in welchem ein Isolationsstreifen, der in einer Matrix eingebettete zweite Fasern aufweist, aufgebracht wird, wobei die zweiten Fasern aus einem Elektrizität nichtleitenden zweiten Material, das zum Beispiel Glas ist, bestehen.

**17.** Verfahren nach einem der Ansprüche 11 bis 16, in welchem nach dem Schritt des Aufbringens eines Verbundstreifens ein Heizschritt durchgeführt wird, im Verlaufe dessen der zwischen der ersten und zweiten Leitung (1) aufgebrachte Verbundstreifen geheizt wird, um die Matrix (11b) des Verbundstreifens zu vernetzen.

**18.** Verfahren zur Bildung einer Verbindung zwischen einer ersten Leitung und einer zweiten Leitung, und in welchem jede Leitung (1) ein hohles Innenrohr (2) und eine in der Dicke der Leitung angeordnete Heizschicht (4) aufweist, **dadurch gekennzeichnet, dass**
die Heizschicht (4) aus einem leitfähigen Material gebildete Fasern aufweist, und

**gekennzeichnet durch**

- Bereitstellung eines Hauptstreifens (11), der in einer Matrix (11b) eingebettete erste Fasern (11a) aufweist, wobei die ersten Fasern aus Kohlenstoff, einem elektrizitätsleitenden Material, sind und die Matrix zumindest aus einem Polymer zusammengesetzt ist, und
- Herstellung einer elektrischen Verbindung zwischen der ersten und zweiten Leitung durch Durchführen der folgenden Schritte:

-- Aufbringen einer Verbindungsschicht (17) auf jede Heizschicht (4) oder um eine zuvor auf den Heizschichten angeordnete Schicht, wobei jede Verbindungsschicht (17) aus einem elektrizitätsleitenden Verbindungsmaterial zusammengesetzt ist, und die Verbindungsschichten (17) mit der Heizschicht (4) der ersten Leitung und mit der Heizschicht (4) der zweiten Leitung in Kontakt gebracht werden, und
-- Aufbringen des Verbundstreifens (11) auf die Verbindungsschicht durch Wickeln um die Rohre.

**Claims**

1. **Composite strip (10)** that extends in a main direction (P) between first and second ends (10a, 10b), the said composite strip comprising a main strip (11) comprising first fibres (11a) embedded in a matrix (11b), the said first fibres being made of carbon, a material that conducts electricity, and the said matrix being made of at least one polymer, and said composite strip further comprising a junction layer (17) formed of an electrically conducting junction material,
the said composite strip **being characterized in that** the said junction layer is placed on the main strip, only at the first and second ends (10a, 10b) of the composite strip.

2. Composite strip according to Claim, in which the junction layer (17) has the form of strips extending along the first and second ends (10a, 10b), each of the said strips having, in the main direction, a width greater than 1 cm and preferably greater than 5 cm.

3. Composite strip according to one of Claims 1 to 2, in which the junction layer (17) has a thickness of between 0.05 mm and 1 mm.

4. Composite strip according to one of Claims 1 to 3, in which the junction material is chosen from a list comprising a polymer filled with electrically conducting particles, a polymer filled with metallic particles, a polymer filled with silver particles, a polymer filled with metalized carbon fibres, a polymer filled with copper fibres, a polymer filled with braided copper fibres.

5. Composite strip according to one of Claims 1 to 4, in which the first fibres (11) extend substantially in the main direction.

6. Composite strip according to one of Claims 1 to 5, in which the first fibres (11) extend in a fibre direction (F) forming a fibre angle ($\beta$) with the main direction, the said fibre angle being between 0 degrees and 45 degrees and preferably between 0 degrees and 10 degrees.

7. Composite strip according to one of Claims 1 to 6, in which the composite strip (10) has the shape of a trapezium having two lateral edges (14a, 14b) that extend in directions parallel to one another and two end edges (13a, 13b) which belong to the ends of the composite strip and which extend in directions that converge towards one another, the junction layer (17) extending parallel to each end edge.

8. Composite strip according to Claim 7, in which the end edges (13a, 13b) form an angle of convergence ($\chi$) of between 0.1 degree and 20 degrees, and preferably between 0.1 degree and 5 degrees.

9. Composite strip according to one of Claims 1 to 8, further comprising a lateral portion (19) in a secondary direction (S) substantially perpendicular to the main direction (P), the said lateral portion not comprising the said first fibres and comprising second fibres (20) embedded in the matrix, the said second fibres being formed of a second material that is not electrically conducting.

10. Composite strip according to Claim 9, in which the second material is glass.

11. **Method for forming a joint** between a first pipe and a second pipe, in which method each pipe (1) comprises an internal hollow tube (2) and a heating layer (4) situated in the thickness of the said pipe, **characterized in that** the said heating layer (4) comprises fibres formed of a conducting material, and **in that**:

- a composite strip (10) is provided and extends in a main direction (P) between first and second ends (10a, 10b), the said composite strip comprising a main strip (11) comprising first fibres (11a) embedded in a matrix (11b), the said first fibres being made of carbon, a material that conducts electricity, the said matrix being made of at least one polymer, and the said composite strip further comprising a junction layer (17) formed of an electrically conducting junction material, the said junction layer being placed on the main strip,

- an electrical joint is made between the first and second pipes by performing the following step:

-- the composite strip (10) is applied to each heating layer (4) or to a layer placed beforehand on the said heating layers by winding around the tubes (2), and in which the junction layer (17) of the composite strip is brought into contact with the heating layer (4) of the first pipe and with the heating layer (4) of the second pipe.

12. Method according to Claim 11, in which the junction layer (17) is placed only at the ends (10a, 10b) of the composite strip, and in which the junction layer (17) of the first end (10a) is brought into contact with the heating layer (4) of the first pipe and the junction layer of the second end (10b) is brought into contact with the heating layer (4) of the second pipe.

13. Method according to Claim 11 or Claim 12, in which each pipe (1) has an end of substantially conical shape at least in the thickness of the heating layer, and in which a composite strip (10) is chosen that has a trapezium shape with a geometry matched to the shapes of the ends of the pipes so that during the electrical-jointing step, the composite strip (10) forms a joint of a shape that substantially complements the conical ends of the heating layers of the pipes by the winding of the trapezium-shaped composite strip around the tubes.

14. Method according to one of Claims 11 to 13, in which the first and second ends (1a, 1b) of the pipes (1) are machined first of all in order to uncover a cylindrical portion of each tube and to make a conical shape in at least the heating layer (4) of each tube (2) .

15. Method according to one of Claims 11 to 14, in which, prior to the electrical-jointing step, a step of welding the tube (2) of the first pipe to the tube (2) of the second pipe is performed.

16. Method according to Claim 15, in which an insulation-jointing step is performed after the welding step and before the electrical-jointing step, and involves applying an insulating strip comprising second fibres embedded in a matrix, the said second fibres being formed of a second material that is not electrically conducting, said second material being, for example, glass.

17. Method according to one of Claims 11 to 16, in which after the step of applying a composite strip, a heating step is performed during which the said composite strip applied between the first and second pipes (1) is heated in order to crosslink the matrix (11b) of the composite strip.

18. **Method for forming a joint** between a first pipe and a second pipe, and in which method each pipe (1) comprises an internal hollow tube (2) and a heating layer (4) situated in the thickness of the said pipe, **characterized in that** the said heating layer (4) comprises fibres formed of a conducting material, and **in that**:

- a main strip (11) is supplied and comprises first fibres (11a) embedded in a matrix (11b), the said first fibres being made of carbon, an electrically conducting material, and the said matrix being made of at least one polymer, and
- an electrical junction is made between the first and second pipes by performing the following steps:

-- a junction layer (17) is applied to each heating layer (4) or around a layer placed on the said heating layers (4) beforehand, each junction layer (17) being made up of an electrically conducting junction material, and the junction layers (17) are brought into contact with the heating layer (4) of the first pipe and with the heating layer (4) of the second pipe, and
-- the main strip (11) is applied to the said junction layer (17) by winding around the tubes.

FIG. 1a

FIG. 1b

EP 3 080 503 B1

## FIG. 2

## FIG. 3

## FIG. 4

## FIG. 5

## FIG. 10

# FIG. 6

10
10a
17  11  17  10b  P
13  11b  14
17  17

# FIG. 7

10
10a
17  11  17  10b  P
13a  11b  13b

# FIG. 8

10
10a
17  11  17  10b  P
13a  11b  13b

# FIG. 9

10
17  11  15a
P
15b  11b

FIG. 11

FIG. 12

FIG. 13

**EP 3 080 503 B1**

## RÉFÉRENCES CITÉES DANS LA DESCRIPTION

**Documents brevets cités dans la description**

- CN 2800021 Y
- FR 2958991
- DE 20311617 U1
- US 2013087278 A1
- DE 102010010929 A1